# FASCICULE DE BREVET EUROPEEN

(11) **EP 0 786 370 B1**
(45) Date de publication et mention de la délivrance du brevet: **05.09.2001**
(21) Numéro de dépôt: 97400126.5
(22) Date de dépôt: 21.01.1997
(51) Int. Cl.: B60N 2/06, B60N 3/06

(54) **Ensemble de glissière pour le réglage de la position longitudinale d'un siège de véhicule automobile**
Gleitaufbau zur Längsverstellung eines Fahrzeugsitzes
Slide assembly for adjusting the longitudinal position of a vehicle seat

(30) Priorité: 26.01.1996 FR 9600952; 26.01.1996 FR 9600953
(43) Date de publication de la demande: 30.07.1997
(73) Titulaire: AUTOMOBILES PEUGEOT, 75116 Paris (FR); AUTOMOBILES CITROEN, 92200 Neuilly-sur-Seine (FR)
(72) Inventeur: Cousty, Olivier, 91480 Quincy sous Senart (FR); Levitre, Gilles, 92230 Gennevilliers (FR)
(74) Mandataire: Moncheny, Michel

(56) Documents cités:
- EP-A- 0 440 880
- GB-A- 2 221 152
- US-A- 5 104 176
- US-A- 5 188 329
- US-A- 5 242 143
- US-A- 5 285 993
- US-A- 5 454 541
- US-A- 5 482 243
- PATENT ABSTRACTS OF JAPAN vol. 096, no. 012, 26 Décembre 1996 & JP 08 197987 A (AICHI MACH IND CO LTD)

## Description

La présente invention concerne un ensemble de glissière pour le réglage de la position longitudinale d'un siège de véhicule automobile.

On connaît déjà dans l'état de la technique un ensemble de glissière, du type comprenant des rails mobile et fixe montés coulissants l'un dans l'autre, et un organe de masquage qui recouvre partiellement ces rails et qui est muni d'une fente longitudinale de passage de moyens reliant le rail mobile au siège, la fente présentant, au moins dans certaines positions du siège, une partie avant recouverte par le siège et une partie arrière découverte de longueur variable en fonction de la position du siège.

Un ensemble de glissière de ce type est décrit, par exemple, dans EP-A-0 440 880.

Habituellement, le siège est relié à deux ensembles de glissière symétriques gauche et droit. La partie arrière de ces ensembles est visible par un passager assis derrière le siège, les pieds de ce dernier pouvant venir au contact de ces ensembles, ce qui pose des problèmes d'ergonomie et d'esthétique.

L'invention a pour but d'améliorer les aspects ergonomiques et esthétiques d'un ensemble de glissière.

A cet effet, l'invention a pour objet un ensemble de glissière pour le réglage de la position longitudinale d'un siège de véhicule automobile, du type précité, caractérisé en ce qu'il comprend des moyens d'obturation de la partie arrière découverte de la fente, ces moyens d'obturation comprenant un rideau, en forme générale de bande, dont une extrémité est solidaire en translation du rail mobile et dont l'autre extrémité est logée de manière déplaçable dans un réceptacle d'escamotage disposé dans le prolongement longitudinal du rail fixe, le rideau étant ainsi déplaçable longitudinalement face à la fente lorsque le siège est déplacé.

Suivant des caractéristiques de différents modes de réalisation de cet ensemble de glissière :
- le rideau est accroché sur une extrémité du rail mobile ;
- le rideau est accroché sur l'extrémité du rail mobile à l'aide de moyens libérables, de préférence des moyens d'encliquetage ;
- l'organe de masquage comprend une face interne tournée vers les rails, et, dans la partie arrière découverte de la fente, le rideau s'étend du côté de la face interne de l'organe de masquage, de préférence au contact de bords longitudinaux de cet organe de masquage délimitant la fente ;
- la face interne de l'organe de masquage comprend des ailes longitudinales de guidage du rideau destinées à coopérer avec les bords longitudinaux de ce rideau ;
- les rails sont logés dans un boîtier d'enjolivement fixe comprenant une partie inférieure formant corps, et une partie supérieure formant couvercle et organe de masquage, fixée sur la partie inférieure ;
- le réceptacle d'escamotage forme un boîtier-guide allongé délimité par deux parois inférieure et supérieure sensiblement parallèles aux faces du rideau et entre lesquelles s'étend ce rideau ;
- le boîtier-guide est constitué par deux éléments en U emboîtés l'un dans l'autre, les âmes de ces éléments étant écartées l'une au-dessous de l'autre et formant les parois inférieure et supérieure du boîtier-guide;
- le boîtier-guide comprend une partie inclinée s'étendant entre une extrémité supérieure avant de ce boîtier-guide, proche des rails, et une extrémité inférieure arrière de ce boîtier-guide, éloignée de ces rails;
- l'extrémité de l'organe de masquage proche du boîtier-guide est accrochée sur l'extrémité correspondante de la paroi supérieure de ce boîtier-guide de manière à prolonger cette paroi ;
- le réceptacle d'escamotage est relié au boîtier d'enjolivement ;
- le réceptacle d'escamotage est venu de matière avec la partie inférieure du boîtier d'enjolivement ;
- le réceptacle d'escamotage forme un boîtier-guide d'enroulement du rideau ;
- le boîtier-guide comprend une paroi délimitant un trajet d'escamotage du rideau sensiblement en spirale;
- une face du rideau comprend une série de bossages transversaux séparés par des amincissements de fléchissement du rideau.

L'invention a également pour objet un agencement d'un ensemble de glissière tel que défini ci-dessus dans l'habitacle d'un véhicule automobile, caractérisé en ce que le réceptacle d'escamotage est disposé derrière le siège relié à l'ensemble de glissière, sous un emplacement de l'habitacle destiné à recevoir les pieds d'un passager assis derrière le siège.

Suivant des caractéristiques de différents modes de réalisation de cet agencement:
- le rail fixe est fixé sur un support qui est solidaire d'un plancher de l'habitacle et qui est surélevé par rapport à ce plancher, et le réceptacle d'escamotage est logé dans un enfoncement qui est formé par le décrochement entre le support et le plancher ;
- le rail fixe est fixé sur le support au moyen, d'une part, d'un pion épaulé, solidaire de l'extrémité avant du rail fixe, emboîté dans une échancrure d'accrochage ménagée dans un organe solidaire du support, et d'autre part, de moyens à vis, assujettissant l'extrémité arrière du rail fixe au support ;
- le réceptacle est fixé sur le plancher.

L'invention sera mieux comprise à la lecture de la description qui va suivre donnée uniquement à titre d'exemple et faite en se référant aux dessins annexés dans lesquels :
- la figure 1 est une vue en élévation d'un siège relié à un ensemble de glissière selon un premier mode de réalisation de l'invention ;
- les figures 2 et 3 sont des vues de dessus des extrémités avant et arrière respectivement de l'ensemble de glissière représenté à la figure 1 ;
- la figure 4 est une vue en coupe suivant la ligne 4-4 de la figure 2 ;
- la figure 5 est une vue en coupe suivant la ligne 5-5 de la figure 3 ;
- la figure 6 est une vue en coupe suivant la ligne 6-6 de la figure 4 ;
- la figure 7 est une vue en coupe suivant la ligne 7-7 de la figure 5 ;
- la figure 8 est une vue similaire à la figure 1 montrant un ensemble de glissière selon un second mode de réalisation de l'invention ;
- la figure 9 est une vue en élévation, en coupe longitudinale, de l'ensemble de glissière représenté à la figure 8 ;
- la figure 10 est une vue en coupe suivant la ligne 10-10 de la figure 9 ;
- la figure 11 est une vue en coupe suivant la ligne 11-11 de la figure 9 ;
- la figure 12 est une vue de détail, à échelle agrandie, de l'extrémité avant de l'ensemble de glissière représenté à la figure 9 ;
- la figure 13 est une vue de dessus de l'ensemble de glissière représenté à la figure 8;
- les figures 14 et 15 sont des vues de dessus et en perspective respectivement de la partie inférieure du boîtier d'enjolivement de l'ensemble de glissière représenté à la figure 8
- les figures 16 et 17 sont des vues en perspective et en coupe longitudinale respectivement d'une extrémité d'accrochage sur le rail mobile du rideau d'obturation de l'ensemble de glissière représenté à la figure 8.

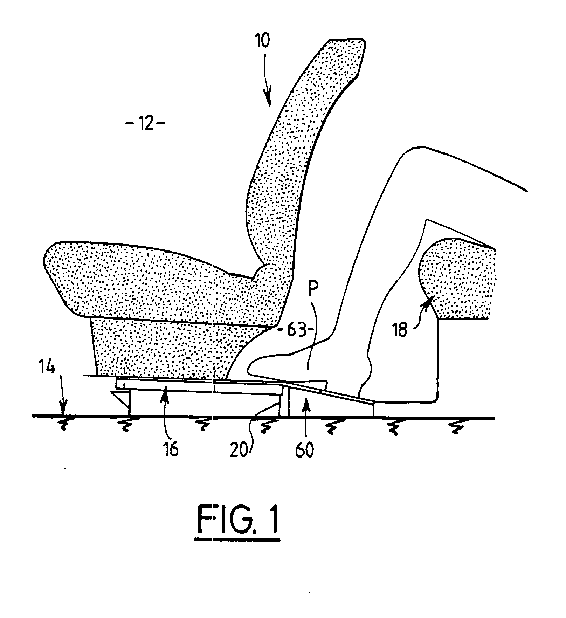

On a représenté sur la figure 1 un siège 10 disposé dans un habitacle 12 de véhicule automobile.

Dans ce qui suit, les orientations avant, arrière, supérieure, inférieure, gauche et droite correspondent aux orientations habituelles pour un occupant assis dans le siège 10.

Le siège 10 est relié à un plancher 14 de l'habitacle au moyen de deux ensembles de glissière 16 gauche et droit selon un premier mode de réalisation de l'invention. Les ensembles de glissière étant symétriques par rapport à un plan vertical longitudinal médian du siège 10, on ne décrira par la suite qu'un seul ensemble de glissière 16.

Sur la figure 1, on a également représenté, partiellement, un autre siège 18 disposé derrière le siège 10 décrit en premier.

Sur les figures 1,4 et 5, on a représenté une traverse 20 en caisson, solidaire du plancher 14, formant un support surélevé par rapport à ce plancher pour l'ensemble de glissière 16 et le siège 10.

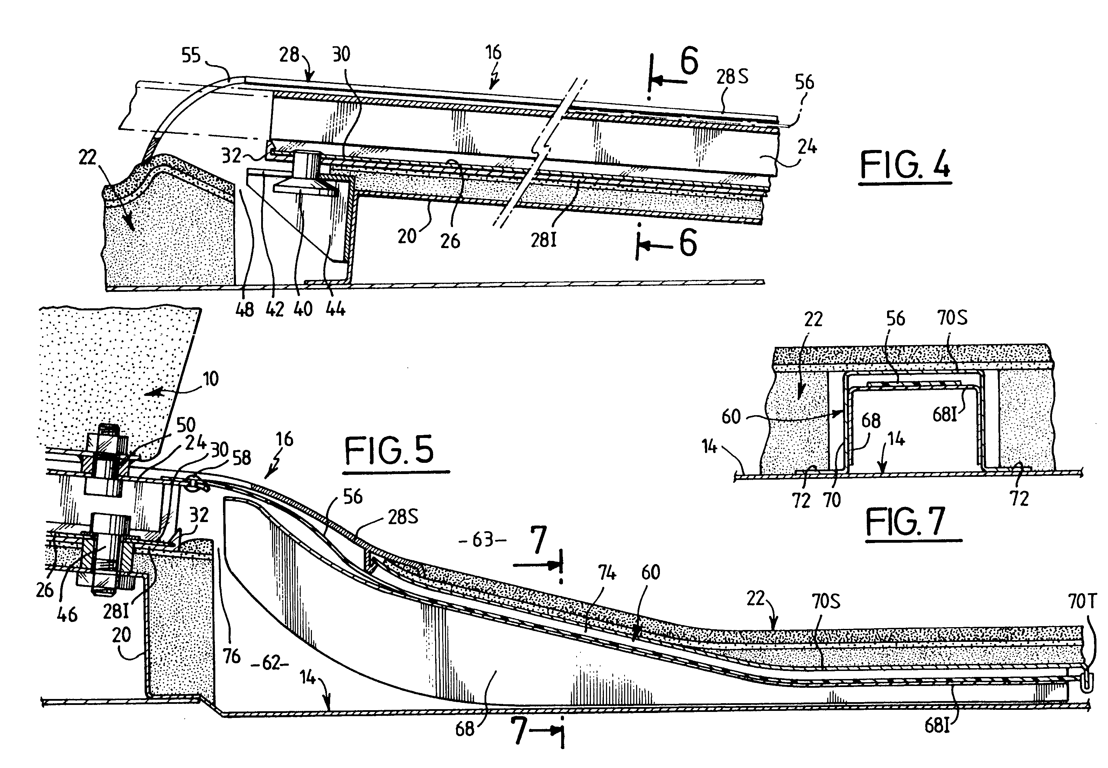

Le plancher 14 et la traverse 20 sont recouverts d'un tapis 22 d'insonorisation multicouche représenté sur les figures 4 à 7.

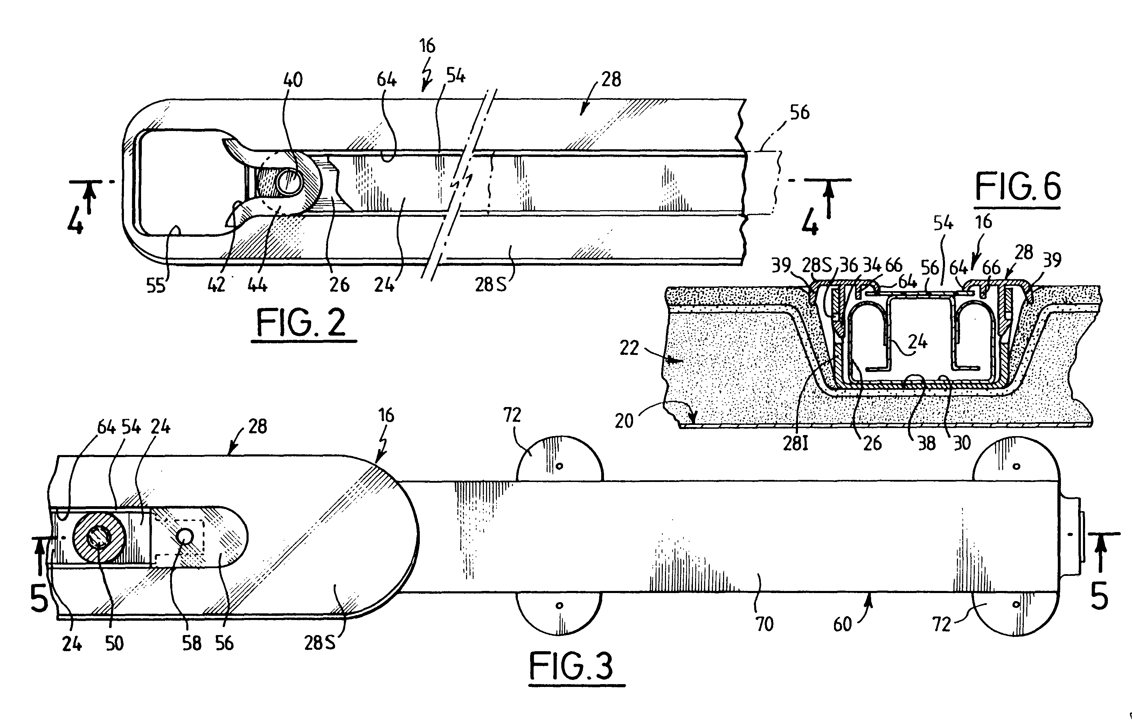

En se référant aux figures 2 à 6, on voit que l'ensemble de glissière 16 comporte, de façon classique, un rail mobile 24 monté coulissant dans un rail fixe 26. Des moyens de roulement, non représentés, sont interposés entre les rails mobile et fixe.

Les rails 24,26 sont logés dans un boîtier d'enjolivement 28 comportant une partie inférieure 28I, formant corps, et une partie supérieure 28S formant couvercle de masquage des rails.

Le corps 28I est fixé sur une semelle 30 du rail fixe 26 au moyen de pattes d'encliquetage 32 accrochées sur les extrémités de la semelle 30 (voir figures 4 et 5).

Le couvercle 28S est fixé sur le corps 28I, de manière à recouvrir partiellement les rails, au moyen de pattes d'encliquetage 34 accrochées dans des ouvertures latérales 36 complémentaires ménagées dans le corps 28I.

Le boîtier d'enjolivement 28 est logé dans un enfoncement longitudinal 38 du tapis 22 de manière que le couvercle de masquage 28S affleure sensiblement la surface visible de ce tapis.

De préférence, le couvercle de masquage 28S est muni de bords périphériques longitudinaux 39 repliés vers le tapis 22 de manière à s'enfoncer légèrement dans celui-ci, après fixation de ce couvercle 28S sur le corps 28I.

Le rail fixe 26 est accroché sur le dessus de la traverse 20 à l'aide, d'une part, d'un pion épaulé 40, solidaire de l'extrémité avant du rail fixe 26, emboîté dans une échancrure d'accrochage 42 ménagée dans une ferrure 44 solidaire de la traverse 20, et d'autre part, de moyens à vis, par exemple un boulon 46, assujettissant l'extrémité arrière du rail fixe 26 à la traverse 20.

Le tapis 22 comporte une ouverture 48, ménagée au niveau de la ferrure 44, permettant l'accès du pion 40 à l'échancrure 42.

Le rail mobile 24 est fixé sur le dessous du siège 10 à l'aide de moyens de liaison classiques comprenant par exemple un boulon 50 tel que représenté sur la figure 5.

Le couvercle de masquage 28S comporte une fente longitudinale 54 de passage des moyens de liaison 50. Cette fente 54 est prolongée, à l'extrémité avant du couvercle 28S, par une ouverture 55 de passage du rail mobile 24.

La fente 54 présente, au moins dans certaines positions du siège 10, une partie avant recouverte par le siège et une partie arrière découverte de longueur variable en fonction de la position du siège.

L'ensemble de glissière 16 comporte de plus des moyens d'obturation de la partie arrière découverte de la fente 54.

Dans l'exemple illustré, les moyens d'obturation comprennent un rideau 56 en forme générale de bande, de largeur supérieure à celle de la fente 54. L'extrémité avant du rideau 56 est accrochée sur la partie supérieure de l'extrémité arrière du rail mobile 24, par exemple au moyen d'un rivet 58, comme cela est représenté sur la figure 5.

L'extrémité arrière du rideau 56 est logée de manière déplaçable dans un réceptacle d'escamotage 60, représenté notamment sur les figures 5 et 7, disposé derrière le siège 10 dans le prolongement longitudinal du rail fixe 26.

Le réceptacle 60 est logé dans un enfoncement 62 qui est formé par le décrochement entre le dessus de la traverse 20 et le plancher 14. Le réceptacle 60 est agencé dans cet enfoncement 62 de manière à s'étendre sous le tapis 22 et sous un emplacement 63 de l'habitacle destiné à recevoir les pieds P d'un passager assis derrière le siège 10, comme cela est représenté sur la figure 1.

Lorsque le siège 10 est déplacé entre sa position extrême arrière, telle que représentée sur la figure 5, et sa position extrême avant, le rideau 56 est déplacé longitudinalement, face à la fente 54, entre sa position reculée représentée à la figure 5 et sa position avancée représentée partiellement en traits mixtes sur la figure 2.

Dans la partie découverte de la fente 54, le rideau 56 s'étend du côté de la face interne du couvercle de masquage 28S qui est tournée vers les rails et qui porte les pattes d'encliquetage 34.

De préférence, le rideau 56 s'étend au contact de bords longitudinaux 64 du couvercle 28S qui sont repliés vers les rails et qui délimitent la fente 54 (voir figure 6).

La face interne du couvercle de masquage 28S porte des ailes longitudinales 66 de guidage du rideau 56, destinées à coopérer avec les bords longitudinaux de ce rideau.

On notera que les pattes d'encliquetage 34 et les ailes de guidage 66 sont venues de matière avec le couvercle de masquage 28S.

En se référant aux figures 5 et 7, on voit que le réceptacle d'escamotage 60 forme un boîtier-guide allongé, fixé au plancher 14 et constitué par deux éléments longitudinaux en U 68,70 emboîtés l'un dans l'autre.

Les âmes sensiblement horizontales de ces éléments 68,70 sont écartées l'une au-dessous de l'autre et forment des parois inférieure 68I et supérieure 70S du boîtier-guide 60. Ces parois 68I,70S sont sensiblement parallèles aux faces du rideau 56, qui s'étend entre ces parois.

La paroi supérieure 70S est prolongée par un bord tombé 70T, replié vers le plancher 14, formant une butée de limitation de la course de recul du rideau 56 dans le boîtier-guide. La longueur du rideau 56 est adaptée pour que, lorsque l'extrémité arrière de ce rideau est en butée contre le bord tombé 70T, l'extrémité avant de ce rideau fasse saillie à travers l'extrémité avant du boîtier-guide 60.

Les ailes sensiblement verticales des éléments 68,70 sont jointives, leur bord libre étant dirigé vers le plancher 14. Le bord libre des ailes de l'élément contenant 70 sont munies de prolongements sensiblement horizontaux 72 formant des pattes de fixation du boîtier-guide 60 sur le plancher 14.

Le boîtier-guide longitudinal 60 comprend une partie inclinée 74 s'étendant entre une extrémité supérieure avant de ce boîtier-guide, proche des rails 24,26, et une extrémité inférieure arrière de ce boîtier-guide, éloignée de ces rails.

Bien entendu, le rideau 56 est fabriqué dans un matériau flexible lui permettant notamment de suivre les variations de forme du boîtier-guide 60.

On notera qu'à l'arrière des rails 24,26, le tapis 22 comporte une ouverture 76 permettant notamment le passage de l'extrémité avant du rideau 56 reliée au rail mobile 24.

L'extrémité arrière du couvercle de masquage 28S, proche du boîtier-guide, est accrochée sur l'extrémité avant correspondante de la paroi supérieure 70S du boîtier-guide de manière à prolonger cette paroi 70S et masquer l'ouverture 76

Les principales étapes du montage de l'ensemble de glissière selon le premier mode de réalisation de l'invention sont les suivantes.

Tout d'abord, le siège 10 étant séparé du plancher, on fixe le rail mobile 24 sur ce siège, on emboîte le rail fixe 26 dans ce rail mobile 24 et on assemble le boîtier d'enjolivement 28.

Par ailleurs, on fixe le boîtier-guide 60 sur le plancher 14 et on loge le rideau 56 dans ce boîtier.

Par la suite, on accroche et on fixe le rail fixe 26 sur la traverse 20 au moyen du pion épaulé 40 et de la vis 46, puis on relie l'extrémité avant du rideau 56, faisant saillie à travers l'extrémité avant du boîtier-guide 60, à l'extrémité arrière du rail mobile 24.

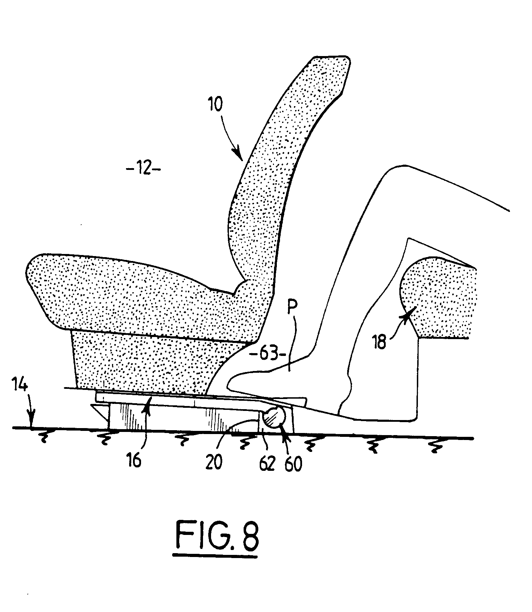

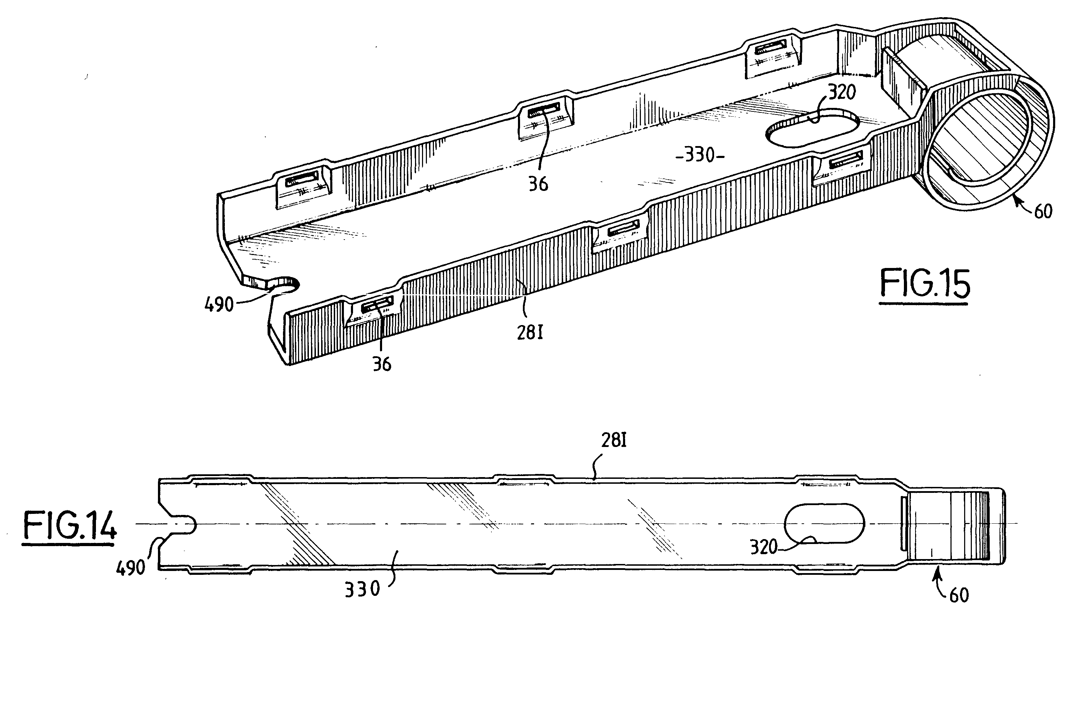

On a représenté sur les figures 8 à 17 un ensemble de glissière selon un second mode de réalisation de l'invention.

Sur ces figures, les éléments analogues à ceux des figures précédentes sont désignés par des références identiques.

Dans ce cas, la semelle 30 du rail fixe 26 comporte, à son extrémité arrière, un puits vertical 310 de contour oblong, logé dans une lumière 320 de contour complémentaire ménagée dans le fond 330 du corps 28I.

Les contours complémentaires du puits 310 et de la lumière 320 permettent d'immobiliser le rail fixe 26 par rapport au fond 330 du corps 28I dans un plan horizontal parallèle à ce fond.

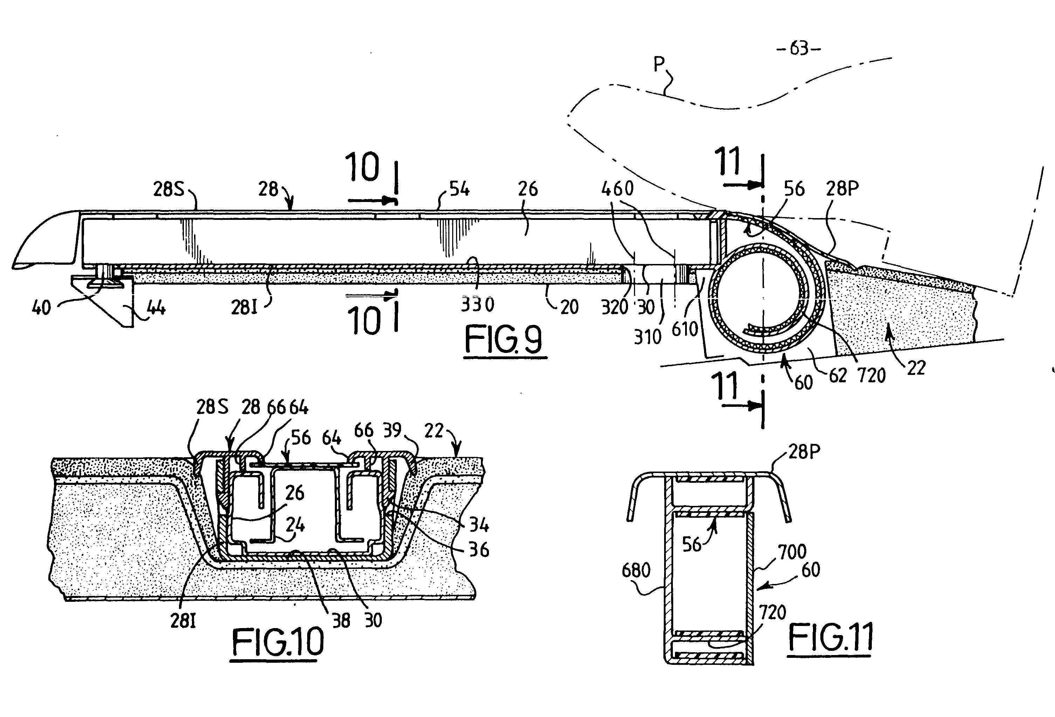

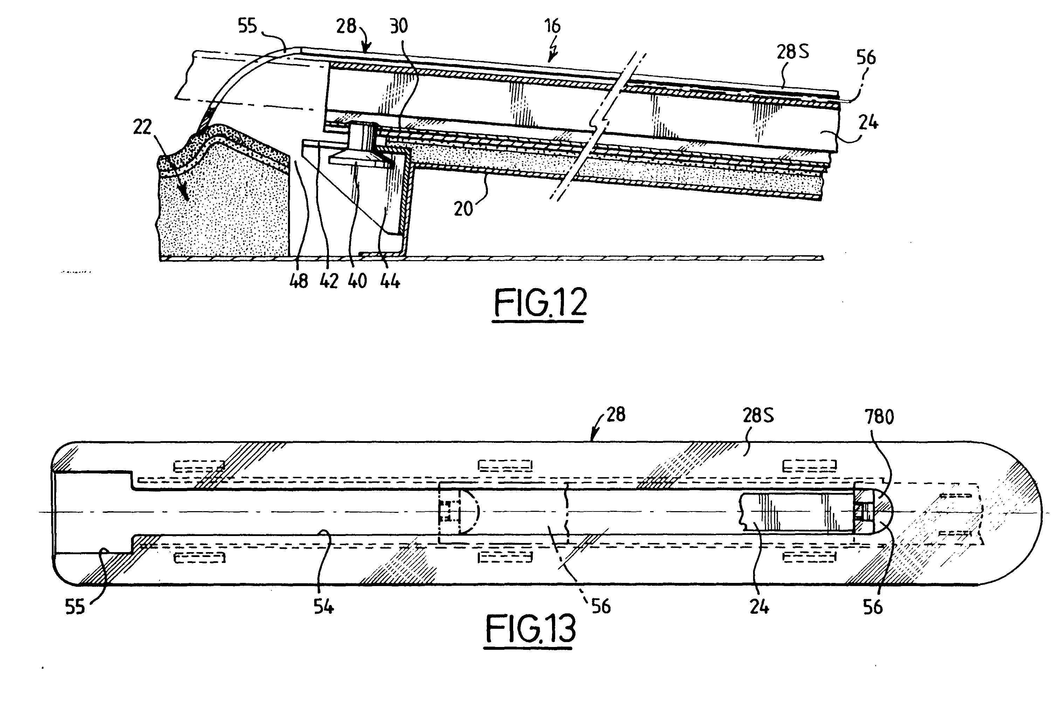

Le rail fixe 26 est accroché sur le dessus de la traverse 20 à l'aide, d'une part, comme dans le premier mode de réalisation, du pion épaulé 40, solidaire de l'extrémité avant du rail fixe 26, emboîté dans l'échancrure d'accrochage 42 ménagée dans la ferrure 44 solidaire de la traverse 20 (voir figure 12), et d'autre part, de moyens à vis, par exemple deux boulons 460, assujettissant l'extrémité arrière du rail fixe 26 à la traverse 20. Les boulons 460, schématisés par des traits mixtes sur la figure 9, sont agencés dans le puits 310.

L'extrémité avant du corps 28I comporte une échancrure 490 pour le passage du pion épaulé 40.

Le rail mobile 24 est fixé sur le dessous du siège 10 à l'aide de moyens de liaison classiques non représentés, par exemple des boulons.

La fente longitudinale 54 du couvercle de masquage 28S permet le passage de moyens reliant le rail mobile au siège.

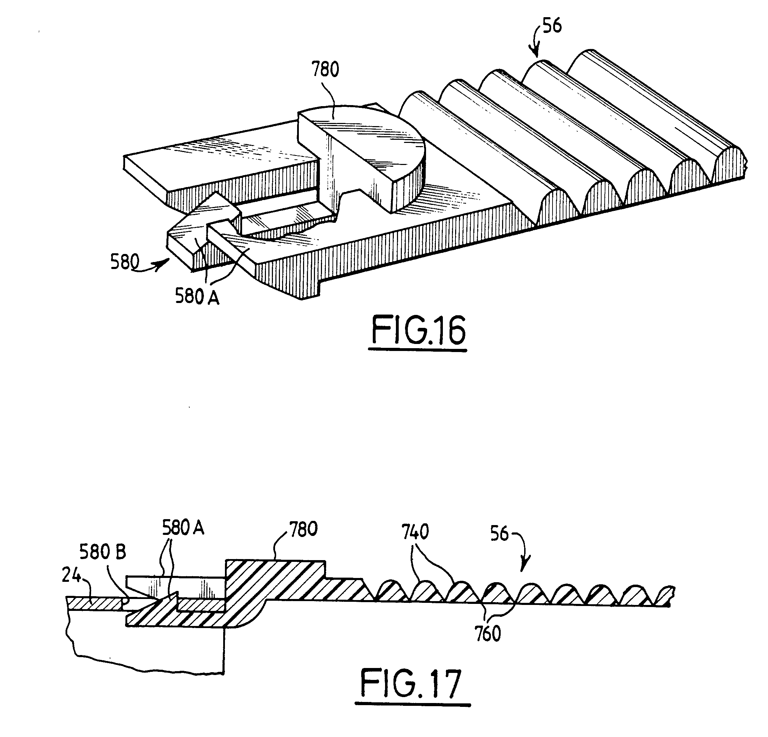

Une première extrémité du rideau d'obturation 56 est accrochée sur la partie supérieure de l'extrémité arrière du rail mobile 24 par des moyens libérables, de préférence des moyens d'encliquetage 580, comme cela est représenté sur les figures 16 et 17.

Ces moyens d'encliquetage comprennent par exemple des pattes élastiques d'accrochage 580A, prolongeant la première extrémité du rideau, coopérant avec un trou d'accrochage 580B ménagé dans le rail mobile 24.

La seconde extrémité du rideau 56 est logée de manière déplaçable dans le réceptacle d'escamotage 60 qui est représenté notamment sur les figures 9, 11 et 15.

Dans le second mode de réalisation, le réceptacle d'escamotage 60 est relié au boîtier d'enjolivement 28. Dans l'exemple illustré (voir figures 8,9 et 15), le réceptacle 60 est venu de matière avec l'extrémité arrière de la partie inférieure 28I du boîtier d'enjolivement 28, de manière à communiquer avec ce boîtier 28.

Le réceptacle 60 est logé, à travers une ouverture 610 du tapis, dans l'enfoncement 62, de manière à s'étendre sous un prolongement arrière 28P du couvercle 28S et sous l'emplacement 63 de l'habitacle, comme cela est représenté sur les figures 8 et 9.

Le prolongement 28P du couvercle masque l'ouverture 610 du tapis, le bord libre de ce prolongement 28P s'enfonçant légèrement dans le tapis 22.

Lorsque le siège 10 est déplacé vers une position quelconque entre ses positions extrêmes avant et arrière, le rideau est déplacé longitudinalement, face à la fente 54, solidairement avec le siège 10. Sur la figure 13, on a représenté en trait plein la position de la première extrémité du rideau lorsque le siège est dans sa position extrême arrière et en trait mixte la position de cette même extrémité du rideau lorsque le siège 10 est dans une position intermédiaire entre ses positions extrêmes.

Comme dans le premier mode de réalisation, les pattes d'encliquetage 34 et les ailes de guidage 66 sont venues de matière avec le couvercle de masquage 28S.

On notera que le rail fixe 26 est immobilisé verticalement dans le boîtier d'enjolivement 28 par coopération avec le fond 330 du corps 28I et avec le bord libre des ailes de guidage 66.

En se référant notamment aux figures 9,11 et 15, on voit que le réceptacle d'escamotage 60 forme un boîtier-guide d'enroulement du rideau 56. Le boîtier-guide 60 a une forme générale cylindrique, d'axe horizontal transversal au boîtier d'enjolivement 28.

Le boîtier-guide 60 comprend un corps 680 et un couvercle d'obturation 700.

Le corps 680 comporte une paroi transversale 720 délimitant un trajet d'escamotage du rideau 56 sensiblement en spirale.

Le rideau 56 est constitué de manière à permettre son enroulement dans le boîtier-guide 60.

De préférence, la face du rideau 56 qui est visible à travers la fente 54 comprend, sur presque toute la longueur du rideau, une série de bossages transversaux 740 séparés par des amincissements 760 formant charnière et permettant ainsi le fléchissement du rideau (voir figures 16 et 17).

On notera que la première extrémité du rideau 56 comporte une butée saillante 780 destinée à coopérer avec l'extrémité arrière de la fente 54 pour limiter le recul de cette extrémité du rideau.

Les principales étapes du montage de l'ensemble de glissière selon le second mode de réalisation de l'invention sont les suivantes.

Tout d'abord, le siège 10 étant séparé du plancher, on fixe le rail mobile 24 sur ce siège, on emboîte le rail fixe 26 dans ce rail mobile 24 et on assemble l'ensemble boîtier d'enjolivement 28-réceptacle 60.

Par la suite, on accroche le rail fixe 26, auquel sont solidarisés le boîtier d'enjolivement et le réceptacle 60, à l'aide du pion épaulé 40 et des moyens à vis 460.

Enfin, on relie la première extrémité du rideau 56 à l'extrémité arrière du rail mobile 24 en faisant coulisser ce rail vers l'arrière, ce qui a pour effet d'encliqueter automatiquement les pattes élastiques 580A du rideau 56 dans l'orifice 580B du rail mobile 24.

L'invention ne se limite pas aux modes de réalisation illustrés sur les figures.

En particulier, le rideau d'obturation 56 peut être accroché ailleurs que sur l'extrémité arrière du rail mobile, à savoir sur tout autre élément solidaire en translation du siège 10.

L'invention comporte de nombreux avantages.

En particulier, le rideau 56 permet d'obturer la partie arrière découverte de la fente 54, ceci même lorsque l'on fait varier la position longitudinale du siège 10 car le rideau 56 se déplace solidairement avec ce siège 10.

Le rideau 56 permet ainsi d'optimiser l'esthétique et l'ergonomie de l'ensemble de glissière, tout en empêchant l'introduction, par l'extrémité arrière découverte de la fente 54, de corps étrangers dans le boîtier d'enjolivement 28 et dans les rails 24,26.

## Revendications

1. Ensemble de glissière pour le réglage de la position longitudinale d'un siège de véhicule automobile, du type comprenant des rails mobile (24) et fixe (26) montés coulissants l'un dans l'autre, et un organe de masquage (28S) qui recouvre partiellement ces rails et qui est muni d'une fente longitudinale (54) de passage de moyens (50) reliant le rail mobile (24) au siège (10), la fente (54) présentant, au moins dans certaines positions du siège, une partie avant recouverte par le siège et une partie arrière découverte de longueur variable en fonction de la position du siège, **caractérisé en ce qu**'il comprend des moyens (56) d'obturation de la partie arrière découverte de la fente, ces moyens d'obturation comprenant un rideau (56), en forme générale de bande, dont une extrémité est solidaire en translation du rail mobile (24) et dont l'autre extrémité est logée de manière déplaçable dans un réceptacle d'escamotage (60) disposé dans le prolongement longitudinal du rail fixe (26), le rideau (56) étant ainsi déplaçable longitudinalement face à la fente (54) lorsque le siège (10) est déplacé.

2. Ensemble de glissière selon la revendication 1, **caractérisé en ce que** le rideau (56) est accroché sur une extrémité du rail mobile (24).

3. Ensemble de glissière selon la revendication 2, **caractérisé en ce que** le rideau (56) est accroché sur l'extrémité du rail mobile (24) à l'aide de moyens libérables (580), de préférence des moyens d'encliquetage.

4. Ensemble de glissière selon l'une quelconque des revendications précédentes, **caractérisé en ce que** l'organe de masquage (28S) comprend une face interne tournée vers les rails (24,26), et en ce que, dans la partie arrière découverte de la fente (54), le rideau (56) s'étend du côté de la face interne de l'organe de masquage (28S), de préférence au contact de bords longitudinaux (64) de cet organe de masquage (28S) délimitant la fente (54).

5. Ensemble de glissière selon la revendication 3 ou 4, **caractérisé en ce que** la face interne de l'organe de masquage (28S) comprend des ailes longitudinales (66) de guidage du rideau (56) destinées à coopérer avec les bords longitudinaux de ce rideau.

6. Ensemble de glissière selon l'une quelconque des revendications précédentes, **caractérisé en ce que** les rails (24,26) sont logés dans un boîtier d'enjolivement fixe (28) comprenant une partie inférieure (28I) formant corps, et une partie supérieure (28S) formant couvercle et organe de masquage, fixée sur la partie inférieure.

7. Ensemble de glissière selon l'une quelconque des revendications 1 à 6, **caractérisé en ce que** le réceptacle d'escamotage (60) forme un boîtier-guide allongé délimité par deux parois inférieure (68I) et supérieure (70S) sensiblement parallèles aux faces du rideau (56) et entre lesquelles s'étend ce rideau.

8. Ensemble de glissière selon la revendication 7, **caractérisé en ce que** le boîtier-guide (60) est constitué par deux éléments en U (68,70) emboîtés l'un dans l'autre, les âmes (68I, 70S) de ces éléments étant écartées l'une au-dessous de l'autre et formant les parois inférieure et supérieure du boîtier-guide.

9. Ensemble de glissière selon la revendication 7 ou 8, **caractérisé en ce que** le boîtier-guide (60) comprend une partie inclinée (74) s'étendant entre une extrémité supérieure avant de ce boîtier-guide, proche des rails, et une extrémité inférieure arrière de ce boîtier-guide, éloignée de ces rails.

10. Ensemble de glissière selon l'une quelconque des revendications 7 à 9, **caractérisé en ce que** l'extrémité de l'organe de masquage (28S) proche du boîtier-guide (60) est accrochée sur l'extrémité correspondante de la paroi supérieure (70S) de ce boîtier-guide de manière à prolonger cette paroi.

11. Ensemble de glissière selon l'une quelconque des revendications 1 à 5 et selon la revendication 6, **caractérisé en ce que** le réceptacle d'escamotage (60) est relié au boîtier d'enjolivement (28).

12. Ensemble de glissière selon la revendication 11, **caractérisé en ce que** le réceptacle d'escamotage (60) est venu de matière avec la partie inférieure (28I) du boîtier d'enjolivement (28).

13. Ensemble de glissière selon l'une quelconque des revendications 1 à 6, **caractérisé en ce que** le réceptacle d'escamotage (60) forme un boîtier-guide d'enroulement du rideau (56).

14. Ensemble de glissière selon la revendication 13, **caractérisé en ce que** le boîtier-guide (60) comprend une paroi (720) délimitant un trajet d'escamotage du rideau (56) sensiblement en spirale.

15. Ensemble de glissière selon la revendication 13 ou 14, **caractérisé en ce qu**'une face du rideau (56) comprend une série de bossages transversaux (740) séparés par des amincissements (760) de fléchissement du rideau.

16. Agencement d'un ensemble de glissière (16) selon l'une quelconque des revendications 1 à 15 dans l'habitacle (12) d'un véhicule automobile, **caractérisé en ce que** le réceptacle d'escamotage (60) est disposé derrière le siège (10) relié à l'ensemble de glissière (16), sous un emplacement (63) de l'habitacle destiné à recevoir les pieds d'un passager assis derrière le siège (10).

17. Agencement selon la revendication 16, **caractérisé en ce que** le rail fixe (26) est fixé sur un support (20) qui est solidaire d'un plancher (14) de l'habitacle et qui est surélevé par rapport à ce plancher, et en ce que le réceptacle d'escamotage (60) est logé dans un enfoncement (62) qui est formé par le décrochement entre le support (20) et le plancher (14).

18. Agencement selon la revendication 17, **caractérisé en ce que** le rail fixe (26) est fixé sur le support (20) au moyen, d'une part, d'un pion épaulé (40), solidaire de l'extrémité avant du rail fixe (26), emboîté dans une échancrure d'accrochage (42) ménagée dans un organe (44) solidaire du support (20), et d'autre part, de moyens à vis (46), assujettissant l'extrémité arrière du rail fixe (26) au support (20).

19. Agencement selon l'une quelconque des revendications 16 à 18, **caractérisé en ce que** le réceptacle (60) est fixé sur le plancher (14).

## Patentansprüche

1. Gleitaufbau für die Längsverstellung eines Kraftfahrzeugsitzes, bestehend aus einer beweglichen Schiene (24) und einer feststehenden Schiene (26), die ineinander verschiebbar montiert sind, und aus einem Maskierungsorgan (28S), das diese Schienen teilweise abdeckt und mit einem Längsschlitz (54) für den Durchgang von Mitteln (50) zur Verbindung der beweglichen Schiene (24) mit dem Sitz (10) versehen ist, wobei dieser Schlitz (54) einen mindestens in manchen Stellungen des Sitzes durch diesen abgedeckten vorderen Teil und einen unabgedeckten hinteren Teil mit einer in Abhängigkeit von der Stellung des Sitzes veränderlichen Länge aufweist, **dadurch gekennzeichnet**, dass er Mittel (56) zum Verschließen des unabgedeckten hinteren Teils des Schlitzes besitzt, die einen im wesentlichen bandförmigen Vorhang (56) umfassen, dessen eines Ende bezüglich Translation mit der beweglichen Schiene (24) fest verbunden ist und dessen anderes Ende von einem in der Längsverlängerung der feststehenden Schiene (26) angeordneten Einzugbehälter (60) beweglich aufgenommen wird, wobei der Vorhang (56) auf diese Weise in dem Schlitz (54) in Längsrichtung beweglich ist, wenn der Sitz (10) verschoben wird.

2. Gleitaufbau nach Anspruch 1, **dadurch gekennzeichnet**, dass der Vorhang (56) an einem Ende der beweglichen Schiene (24) eingehängt ist.

3. Gleitaufbau nach Anspruch 2, **dadurch gekennzeichnet**, dass der Vorhang (56) am Ende der beweglichen Schiene (24) mit Hilfe von freigebbaren Mitteln (580), vorzugsweise Einklinkmitteln, eingehängt ist.

4. Gleitaufbau nach einem der vorhergehenden Ansprüche, da**durch gekennzeichnet, dass** das Maskierungsorgan (28S) eine den Schienen (24, 26) zugewandte Innenseite besitzt und dass der Vorhang (56) in dem unabgedeckten hinteren Teil des Schlitzes (54) sich auf der Seite der Innenseite des Maskierungsorgans (28S) vorzugsweise in Kontakt mit den Schlitz (54) abgrenzenden Längsrändern (64) dieses Maskierungsorgans (28S) erstreckt.

5. Gleitaufbau nach Anspruch 3 oder 4, **dadurch gekennzeichnet**, dass auf der Innenseite des Maskierungsorgans (28S) Längsrippen (66) zur Führung des Vorhangs (56) vorgesehen sind, die dazu bestimmt sind, mit den Längsrändern des Vorhangs zusammenzuwirken.

6. Gleitaufbau nach einem der vorhergehenden Ansprüche, da**durch gekennzeichnet, dass** die Schienen (24, 26) in einem feststehenden Ziergehäuse (28) untergebracht sind, das einen einen Körper bildenden unteren Teil (28I) und einen oberen Teil (28S) besitzt, der einen Deckel und ein Maskierungsorgan bildet und an dem unteren Teil befestigt ist.

7. Gleitaufbau nach einem der Ansprüche 1 bis 6, **dadurch gekennzeichnet**, dass der Einzugbehälter (60) ein langgestrecktes Führungsgehäuse bildet, das durch eine untere Wand (68I) und eine obere Wand (70S) abgegrenzt ist, die zu den Seiten des Vorhangs (56) im wesentlichen parallel sind und zwischen denen sich der Vorhang erstreckt.

8. Gleitaufbau nach Anspruch 7, **dadurch gekennzeichnet**, dass das Führungsgehäuse (60) von zwei ineinandergesteckten U-förmigen Elementen (68, 70) gebildet wird, deren Mittelstege (68I, 70S) untereinander angeordnet und voneinander entfernt sind und die untere und die obere Wand des Führungsgehäuses bilden.

9. Gleitaufbau nach Anspruch 7, **dadurch gekennzeichnet**, dass das Führungsgehäuse (60) einen schrägen Teil (74) besitzt, der sich zwischen einem den Schienen nahen vorderen oberen Ende des Führungsgehäuses und einem von diesen Schienen entfernten hinteren unteren Ende dieses Führungsgehäuses erstreckt.

10. Gleitaufbau nach einem der Ansprüche 7 bis 9, **dadurch gekennzeichnet**, dass das dem Führungsgehäuse (60) nahe Ende des Maskierungsorgans (28S) an dem entsprechenden Ende der oberen Wand (70S) des Führungsgehäuses so eingehängt ist, dass diese Wand verlängert wird.

11. Gleitaufbau nach einem der Ansprüche 1 bis 5 und nach Anspruch 6, **dadurch gekennzeichnet**, dass der Einzugbehälter (60) mit dem Ziergehäuse (28) verbunden ist.

12. Gleitaufbau nach Anspruch 11, **dadurch gekennzeichnet**, dass der Einzugbehälter (60) mit dem unteren Teil (28I) des Ziergehäuses (28) einstückig ausgeführt ist.

13. Gleitaufbau nach einem der Ansprüche 1 bis 6, **dadurch gekennzeichnet**, dass der Einzugbehälter (60) ein Führungsgehäuse zum Aufrollen des Vorhangs (56) bildet.

14. Gleitaufbau nach Anspruch 13, **dadurch gekennzeichnet**, dass das Führungsgehäuse (60) eine Wand (720) aufweist, die einen im wesentlichen spiralförmigen Einzugsweg des Vorhangs (56) abgrenzt.

15. Gleitaufbau nach Anspruch 13 oder 14, **dadurch gekennzeichnet**, dass eine Seite des Vorhangs (56) eine Reihe von Quererhebungen (740) aufweist, die durch Verjüngungen (760) zum Biegen des Vorhangs getrennt sind.

16. Anordnung eines Gleitaufbaus (16) nach einem der Ansprüche 1 bis 15 in dem Karosseriegehäuse (12) eines Kraftfahrzeugs, **dadurch gekennzeichnet**, dass der Einzugbehälter (60) hinter dem mit dem Gleitaufbau (16) verbundenen Sitz (10) unter einem Bereich (63) des Karosseriegehäuses angeordnet ist, der zur Aufnahme der Füße eines hinter dem Sitz (10) sitzenden Insassen bestimmt ist.

17. Anordnung nach Anspruch 16, **dadurch gekennzeichnet**, dass die feststehende Schiene (26) auf einem Auflager (20) befestigt ist, das mit einem Boden (14) des Karosseriegehäuses fest verbunden ist und bezüglich dieses Bodens erhöht ist, und dass der Einzugbehälter (60) in einer Vertiefung (62) untergebracht ist, die durch die Abstufung zwischen dem Auflager (20) und dem Boden (14) gebildet wird.

18. Anordnung nach Anspruch 17, **dadurch gekennzeichnet**, dass die feststehende Schiene (26) auf dem Auflager (20) befestigt ist, und zwar einerseits mit Hilfe eines mit einer Schulter versehenen Zapfens (40), der mit dem vorderen Ende der feststehenden Schiene (26) fest verbunden ist und in einen Einhängeausschnitt (42) eingesteckt ist, der in einem mit dem Auflager (20) fest verbundenen Organ (44) vorgesehen ist, und andererseits mit Hilfe von Schraubeinrichtungen (46), durch die das hintere Ende der feststehenden Schiene (26) an dem Auflager (20) befestigt wird.

19. Anordnung nach einem der Ansprüche 16 bis 18, **dadurch gekennzeichnet**, dass der Behälter (60) auf dem Boden (14) befestigt ist.

## Claims

1. Slide assembly for adjusting the longitudinal position of a motor vehicle seat:, of the type comprising movable (24) and fixed (26) rails which are mounted for sliding inside each other, and a masking member (28S) which partially covers the rails and which is provided with a longitudinal slot (54) for the passage of means (50) which connect the movable rail (24) to the seat (10), the slot (54) having, at least in some positions of the seat, a front portion which is covered by the seat and an uncovered rear portion of variable length dependent on the position of the seat, **characterised in that** the assembly comprises means (56) for closing the uncovered rear portion of the slot, those closure means comprising a curtain (56) which is generally strip-shaped and one end of which is integral in translation with the movable rail (24) and the other end of which is housed in a displaceable manner in a retraction receptacle (60) which is arranged in the longitudinal extension of the fixed rail (26), the curtain (56) thereby being displaceable longitudinally facing the slot (54) when the seat (10) is displaced.

2. Slide assembly according to claim 1, **characterised in that** the curtain (56) is secured to one end of the movable rail (24).

3. Slide assembly according to claim 2, **characterised in that** the curtain (56) is secured to the end of the movable rail (24) *via* releasable means (580), preferably snap-fit means.

4. Slide assembly according to any one of the preceding claims, **characterised in that** the masking member (28S) comprises an inner face which is turned towards the rails (24, 26), and in that, in the rear uncovered portion of the slot (54), the curtain (56) extends from the side of the inner face of the masking member (28S), preferably extending until in contact with longitudinal edges (64) of the masking member (28S) which delimit the slot (54).

5. Slide assembly according to claim 3 or 4, **characterised in that** the inner face of the masking member (28S) comprises longitudinal flanges (66) for guiding the curtain (56) which are intended to co-operate with the longitudinal edges of the curtain.

6. Slide assembly according to any one of the preceding claims, **characterised in that** the rails (24, 26) are housed in a fixed trim casing (28) which comprises a lower portion (28I) which forms the body and an upper portion (28S) which forms the cover and the masking member which is fixed to the lower portion.

7. Slide assembly according to any one of claims 1 to 6, **characterised in that** the retraction receptacle (60) forms an extended guide casing which is delimited by two lower (68I) and upper (70S) walls which are substantially parallel with the faces of the curtain (56) and between which the curtain extends.

8. Slide assembly according to claim 7, **characterised in that** the guide casing (60) is constituted by two U-shaped elements (68, 70) which are nested inside each other, the webs (68I, 70S) of those elements being spaced one below the other and forming the lower and upper walls of the guide casing.

9. Slide assembly according to claim 7 or 8, **characterised in that** the guide casing (60) comprises an inclined portion (74) which extends between an upper front end of the guide casing, which is close to the rails, and a lower rear end of the guide casing, which is remote from the rails.

10. Slide assembly according to any one of claims 7 to 9, **characterised in that** the end of the masking member (28S) that is close to the guide casing (60) is secured to the corresponding end of the upper wall (70S) of the guide casing in order to extend the wall.

11. Slide assembly according to any one of claims 1 to 5 and according to claim 6, **characterised in that** the retraction receptacle (60) is connected to the trim casing (28).

12. Slide assembly according to claim 11, **characterised in that** the retraction receptacle (60) is integral with the lower portion (28I) of the trim casing (28).

13. Slide assembly according to any one of claims 1 to 6, **characterised in that** the retraction receptacle (60) forms a guide casing for winding the curtain (56).

14. Slide assembly according to claim 13, **characterised in that** the guide casing (60) comprises a wall (720) which delimits a retraction path for the curtain (56) which is substantially spiral-shaped.

15. Slide assembly according to claim 13 or 14, **characterised in that** a face of the curtain (56) comprises a series of transverse projections (740) which are separated by tapered portions (760) for flexion of the curtain.

16. Arrangement of a slide assembly (16) according to any one of claims 1 to 15 in the passenger space (12) of a motor vehicle, **characterised in that** the retraction receptacle (60) is arranged behind the seat (10) connected to the slide assembly (16) and under a region (63) of the passenger space which is intended to receive the feet of a passenger who is seated behind the seat (10).

17. Arrangement according to claim 16, **characterised in that** the fixed rail (26) is fixed to a support (20) which is integral with a floor (14) of the passenger space and which is raised relative to the floor, and in that the retraction receptacle (60) is housed in a space (62) which is formed by the spacing between the support (20) and the floor (14).

18. Arrangement according to claim 17, **characterised in that** the fixed rail (26) is fixed to the support (20) by means of, on the one hand, a shouldered pin (40) which is integral with the front end of the fixed rail (26) and which is inserted into a fixing recess (42), which is arranged in a member (44) which is integral with the support (20), and, on the other hand, threaded means (46) which fix the rear end of the fixed rail (26) to the support (20).

19. Arrangement according to any one of claims 16 to 18, **characterised in that** the receptacle (60) is fixed to the floor (14).
